(19) Europäisches Patentamt

European Patent Office

Office européen des brevets

(11) EP 0 899 569 A2

(12) EUROPEAN PATENT APPLICATION

(43) Date of publication:
03.03.1999 Bulletin 1999/09

(51) Int. Cl.⁶: **G01N 30/88**, G01N 30/74

(21) Application number: 98115912.2

(22) Date of filing: 24.08.1998

(84) Designated Contracting States:
AT BE CH CY DE DK ES FI FR GB GR IE IT LI LU
MC NL PT SE
Designated Extension States:
AL LT LV MK RO SI

(30) Priority: 28.08.1997 JP 232112/97

(71) Applicant: **Hitachi, Ltd.**
**Chiyoda-ku, Tokyo 101-8010 (JP)**

(72) Inventors:
• **Ishii, Kimihiko**
**Hitachinaka-shi, Ibaraki 312-0056 (JP)**
• **Yamada, Yoshiaki**
**Tsuchiura-shi, Ibaraki 300-0036 (JP)**
• **Mori, Kiyotoshi**
**Hitachinaka-shi, Ibaraki 312-0033 (JP)**

(74) Representative:
**von Hellfeld, Axel, Dr. Dipl.-Phys. et al**
**Wuesthoff & Wuesthoff**
**Patent- und Rechtsanwälte**
**Schweigerstrasse 2**
**81541 München (DE)**

(54) **Liquid chromatographic analysis apparatus and liquid chromatographic analyzing method**

(57) In a chromatograph comprising a pump, a sample injecting unit, a column, a photo-diode array detector and a data processing unit having a spectrum library of registered spectrums of known components, a spectrum selected in advance from the spectrum library is compared with a spectrum of each of peaks in an actual sample. Thereby, it is possible to reduce number of spectrum comparisons required for identification, and it is further possible to perform identification speedy since the identification can be performed during analyzing.

## FIG.1

EP 0 899 569 A2

**Description**

BACKGROUND OF THE INVENTION

The present invention relates to a liquid chromatographic Analysis apparatus and a liquid chromatographic analyzing method.

In liquid chromatography, a component of each peak is identified based on a retention time corresponding to the peak. However, when an actually measured sample contains a mixed component having a retention time nearly equal to a retention time of an objective component to be identified, the objective component cannot be identified using only the retention time.

In order to solve this problem, in identification in a liquid chromatograph using a photo-diode array detector in which a spectrum of each peak can be ascertained, identification is performed by comparing a spectrum of each peak at a retention time in an actual sample with a spectrum in a spectrum library pre-storing spectrums of contained components in addition to the identifying method using the retention time described above to improve the accuracy of identifying the objective component.

Such liquid chromatographic analysis apparatus is shown in USP 5,592,402, for example.

However, in the above-mentioned conventional technology of identifying an objective component by comparing a spectrum of each peak in an actual sample with spectrums in the spectrum library, it is necessary to compare each of the peaks with all the spectrums registered in the spectrum library. Therefore, maximum number of comparisons to complete the identification is the product of a total number of the peaks and a total number of all the spectrums registered in the library. Accordingly, as the number of the spectrums registered in the library is more, time required for identifying the objective component becomes very longer.

Further, the above-mentioned conventional identification technology is effective only when analysis of the actual sample has been completed. Therefore, in a case where the analysis time is as very long as several hours, even if the peak of the objective component is detected just soon after starting the analysis of the actual sample, it is necessary to wait at least the remaining several hours until the analysis is completed in order to perform the identifying processing by comparing the result with the library data, which is inefficient.

SUMMARY OF THE INVENTION

In a case where only one objective component is selectively acquired out of an actual sample containing a plurality of mixed components, in order to complete the selective acquisition by once of the analysis it is required that a start time and an end time of a peak of the objective component are initially detected by identify which peak the objective component corresponds to, and then selectively acquiring start time and selectively acquiring end time of a selective acquisition unit are controlled based on the detected time information on the objective component. In the conventional technology, it is impossible to perform the series of work of "identification and selective acquisition" during once of analysis, and it is required to ascertain the retention time of the objective component in advance. In addition to this, since the retention time of the peak of the objective component is changed when the measurement condition such as an effluent, a column or the like is changed, it is required to ascertain the retention time of the objective component every time the measurement condition is changed.

An object of the present invention is to provide a liquid chromatograph which is capable of rapidly performing identification, improving the identifying ability and easily confirming that the identification is certainly performed, and also to provide a liquid chromatograph which is capable of selectively acquiring an objective component out of an actual sample.

In order to attain the above object, the present invention is characterized by a liquid chromatograph comprising a means for analyzing a sample containing a single component or a plurality of mixed components and displaying the analysis result of the sample as a graph of a wave-shaped line of retention time versus signal strength; and a means for forming a spectrum datum at a retention time during generating a wave-form with peak on the graph of the wave-shaped line in a form of a graph and displaying the graph, which comprises a standard data library including retention times and spectrum data for a plurality of components, and identification processing is performed by comparing a spectrum of an objective component in the standard data library selected before starting an analysis or during performing the analysis with the spectrum at the time of generating the wave-form with peak.

It is preferable to calculate each similar degree of the spectrum of the objective component to each of the wave-forms with peak in the graph of the wave-shaped line, and to convert the similar degree into a numeral and display it by superposing the similar degree on the graph of the wave-shaped line.

Further, it is preferable to display rank of the similar degree of each of the wave-forms with peak in the graph of the wave-shaped line by superposing the similar degree on the graph of the wave-shaped line.

Further, it is preferable to change a displayed color for each of the wave-forms with peak depending on difference in the similar degree to each of the wave-forms with peak in the graph of the wave-shaped line.

Further, it is preferable that the liquid chromatograph comprises a means for setting a threshold in regard to signal intensities of the wave-forms with peak, and the means compares the wave-forms with peak within the range of the preset threshold with a selected datum in the standard data library.

Further, it is preferable that the liquid chromatograph comprises a means for setting a specified range in regard to the retention time, and the means compares the wave-forms with peak within the range of the set retention time with a selected datum in the standard data library.

Further, it is preferable that the comparisons of the selected datum in the standard data library with the data of the analysis result are performed during performing the analysis at the same time.

Furthermore, in order to attain the above object, the present invention is characterized by a liquid chromatograph comprising a means for analyzing a sample containing a single component or a plurality of mixed components and displaying the analysis result of the sample as a graph of a wave-shaped line of retention time versus signal strength; and a means for forming a spectrum datum at a retention time during generating a wave-form with peak on the graph of the wave-shaped line in a form of a graph and outputting the graph, which comprises a library storing spectrum data for a plurality of components; a means for selecting a spectrum of a component to be identified from the library before analyzing a sample; a means for identifying an objective component from the sample by successively comparing the spectrum data obtained by the analysis of the sample with the spectrum datum in the library; and a means for calculating a time when the wave-form with peak of the objective component reaches its peak top, and therein the selective acquisition unit is controlled based on the time when the wave-form with peak reaches its peak top.

Furthermore, in order to attain the above object, the present invention is characterized by a liquid chromatograph comprising a means for analyzing a sample containing a single component or a plurality of mixed components and displaying the analysis result of the sample as a graph of a wave-shaped line of retention time versus signal strength; and a means for forming a spectrum datum at a retention time during generating a wave-form with peak on the graph of the wave-shaped line in a form of a graph and outputting the graph, which comprises a library storing spectrum data for a plurality of components; a means for selecting a spectrum of a component to be identified out of the library before analyzing a sample; a means for identifying an objective component from the sample by successively comparing the spectrum data obtained by the analysis of the sample with the spectrum datum in the library; and a means for calculating a rise time and a fall time of the wave-form with peak of the objective component, and therein the selective acquisition unit is controlled based on the rise time and the fall time of the wave-form with peak.

In the present invention, by selecting a spectrum of an objective component to be identified a spectrum of a known component out of the spectrum library in advance and providing the means for comparing the selected Spectrum with a spectrum of each of peaks, it is possible to reduce number of spectrum comparisons required for identification and to substantially shorten time for the identification. Further, by selecting the selected spectrum before analyzing and providing the means for comparing the spectrum of each of the peak in real time, it is possible to identify the objective component during analyzing the actual sample and not necessary to wait until the analysis is completed.

Further, by specifying only a peak corresponding to conditions within the range of a preset retention time and within a preset signal strength threshold of a wave-form with peak as an object to be identified, it is possible to reduce number of spectrum comparisons required for identification. In addition to this, it is possible to avoid from erroneously identifying a component which is similar to the objective component only in spectrum but completely different from the objective component in substance or to avoid from erroneously identifying a noise.

Further, by converting the similar degrees into numerals and displaying the similar degrees by superposing it on the graph of the wave-shaped line, it is possible to easily discriminate the objective component. Further, by displaying a rank of similar degree of a spectrum to each of the peaks on the graph of a wave-shaped line, it is possible to easily discriminate the objective component. Further, by displaying the wave-form peaks by changing colors, it is possible to easily discriminate the objective component. Further, by outputting the identified result of the objective component in a form of report, it is possible to confirm that the identification has been certainly performed.

Furthermore, by selecting a spectrum of a component to be identified from the library before analyzing a sample and by identifying an objective component from an actual sample in real time and then by controlling a starting timing of selective acquisition and an ending timing of selective acquisition of the selective acquisition unit based on a starting time and an ending time of the peak of the objective component, it is possible to selectively acquire only the objective component from the actual sample certainly even if the retention time of the peak of the objective component is changed due to change in the measurement conditions such as changes of the effluent, the column and so on. Further, by controlling a starting timing of selective acquisition and an ending timing of selective acquisition of the selective acquisition unit based on the retention time of the peak of the objective component, it is possible to selectively acquire the objective component having a high purity from the actual sample.

EP 0 899 569 A2

BRIEF DESCRIPTION OF THE DRAWINGS

FIG. 1 is a block diagram showing the construction of an example of a liquid chrmatograph system in the present invention.

FIG. 2 is a graph showing an example of a chromatograph obtained from a case of injecting an actual sample containing three components in the present invention.

FIG. 3 is a graph showing an example of spectrums obtained from the case of injecting the actual sample containing three components in the present invention.

FIG. 4 is a table showing an example of a library displayed when an objective components are selected in the present invention.

FIG. 5 is a graph showing spectrums used for identifying the objective components in the present invention.

FIG. 6 is a graph showing an example of a judged result of the identification in the present invention.

FIG. 7 is a table showing an example of an output report of an identification result in the present invention.

FIG. 8 is a graph showing an example of a chromatograph obtained from a case of injecting an actual sample containing a plurality of components in the present invention.

FIG. 9 is a graph showing an example of spectrums obtained from the case of injecting the actual sample containing the plurality of components in the present invention.

FIG. 10 is a table showing another example of an output report of the identification result in the present invention.

FIG. 11 is a block diagram showing the construction of an another example of a system in which an objective component is selectively acquired in the present invention.

FIG. 12 is a flow chart showing the processing for selectively acquiring only an objective component out of an actual sample in the present invention.

DETAILED DESCRIPTION OF THE PREFERRED EMBODIMENT

An embodiment of the present invention will be described below.

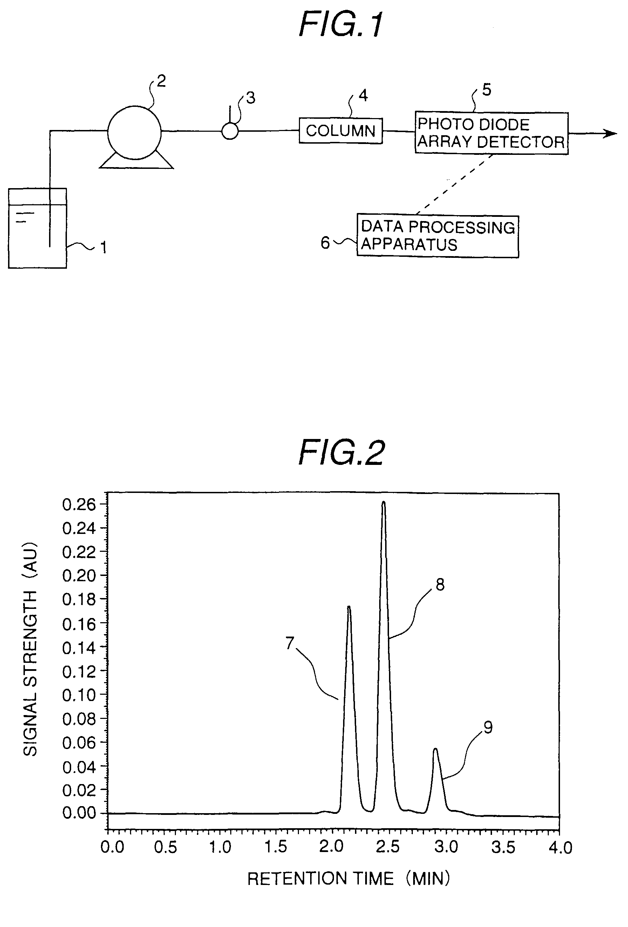

FIG. 1 shows the basic construction of an example of a liquid chrmatograph system. The reference character 1 is an effluent and the reference character 2 is a pump, and the effluent 1 is transferred to a sample injecting unit indicated by the reference character 3 using the pump 3. A sample to be measured is injected by the sample injection unit 3 and is separated by a column indicated by the reference character 4. A photo-diode array detector indicated by the reference character 5 detects absorption spectrums of the effluent from the column continuously on a time axis (the detection is performed with a certain sampling interval, in the strict sense), and the data is transmitted to a data processing unit indicated by the reference character 6 having a spectrum library to perform identification of an objective component.

FIG. 2 is an example of chromatograph of a detected result obtained from a case of injecting an actual sample containing three components of naphthale, anthrace and chrysene, and each of the wave-form peaks 7, 8 and 9 corresponds to a wave-form indicating any one of naphthale, anthrace and chrysene. A detected result commonly used is such a graph of wave-shaped line expressed by retention time versus signal strength, and output to and displayed on a display unit (not shown) such as a display unit in the data processing unit 6.

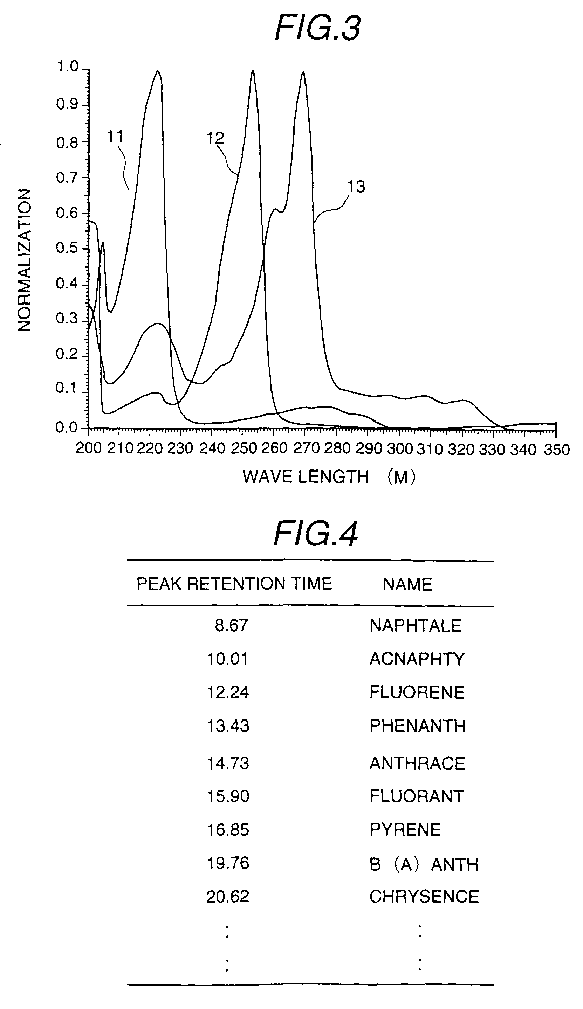

FIG. 3 shows the spectrums at the peak top time of the respective wave-forms of the detected result of FIG. 2, and each of the spectrums 11, 12 and 13 is a spectrum datum obtained from the analysis of the actual sample at the retention time when each of the wave-form peaks 7, 8 and 9 is at its peak top, respectively. At identifying objective components, the identification is performed based on the spectrum data.

FIG. 4 shows a part of a library stored in the data processing unit 6 which is obtained by using reference samples. The data of the library are formed by analyzing each of samples containing a single component as a reference sample, and detecting its peak retention time and its spectrum, and then classifying the results by each of the components as the reference datum. In the present embodiment, on the display screen of the data processing unit 6, each of the peak retention times for each of the components is displayed together with each of the component names in the form of a table in the library as shown in FIG. 4. An operator operating the apparatus specifies an objective component to be identified out of this table of the library. In addition to the peak retention times, spectrum data are registered in the library with corresponding to each of the components.

A case of specifying anthrace as an objective component will be described here.

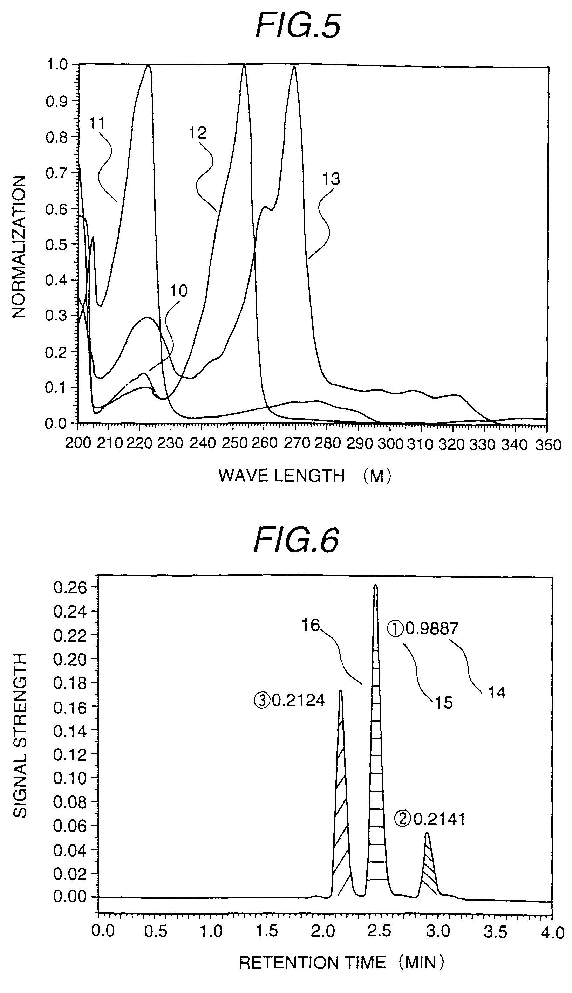

When the operator select anthrace out of the table of the library of FIG. 4, a spectrum datum of anthrace is selected out of the library and compared by superposing the spectrum datum in the library with each of the spectrum data of the detected result shown in FIG. 3. FIG. 5 shows an aspect of superposing the spectrum datum in the library with the spectrum data of the detected result. The wave-form peak 10 is the spectrum of anthrace registered in the

4

spectrum library contained in the data processing unit as a known component. According to FIG. 5, it can be understood that the spectrum 12 is most similar to the spectrum of anthrace, and consequently it can be estimated that the peak 8 in the graph expressed the analysis result using the retention time shown in FIG. 2 is the peak of anthrace to be identified.

In the detailed processing of the identification, comparison of the spectrum 10 of anthrace in the library with the spectrum at each of the peak tops in the wave-form shown using the retention time is performed by calculating a numeral as a similar degree.

FIG. 6 is a graph adding the identification result to the detected result shown in FIG. 2, and displayed on the displaying screen of the data processing unit 6 or the like as a result of the identification processing. The numeral 14 displayed near each of the peaks in FIG. 6 is the numeral which is converted from the similar degree, and is a correlation coefficient obtained by comparing the peak top spectrum of each of the peaks with the spectrum 10 of anthrace registered in the library. The correlation coefficient is calculated based on the following equation.

$$Corr, Coeff = \frac{\sum_i^n a_i b_i}{\sqrt{\sum_i^n a_i^2 \sum_i^n b_i^2}}$$

$$------ (1)$$

In the above equation, $A=(a_1, a_2...a_n)$ and $B=(b_1, b_2...b_n)$ express the spectrum of the library to be compared, respectively, and the spectrum of the detected result, and $a_i$ and $b_i$ express values of absorption at an arbitrary wavelength (wavelength i) of the respective spectrums.

According to the correlation coefficient obtained by the above equation, it can be easily judged that the central peak 8 having the maximum correlation coefficient in FIG. 6 corresponds to anthrace.

Further, in the present embodiment, a number indicating the rank of the similar degree of the spectrum as shown by the reference character 15 is displayed together with the correlation coefficient in order to be easily judged that the peak 8 having the first rank of the similar degree corresponds to anthrace. Further, by classifying the peaks by color corresponding to the similar degree, it is possible to easily judge by the sense of sight that the peak 8 corresponds to anthrace.

According to the present embodiment, number of comparisons of the spectrums required for identification is only three times corresponding to number of the detected peaks. Accordingly the identification time can be substantially shortened compared to the conventional identification technology in which number of comparisons required is the product of the total number of peaks and the total number of spectrums registered in the library. Further, if the spectrum of anthrace 10 of the objective component is selected before analyzing the actual sample, by successively comparing the spectrum of anthrace with the spectrum of each of the peaks in real time it is possible to identify the objective component of anthrace at the time when the peak 8 is detected without waiting until the time when the analysis is completed.

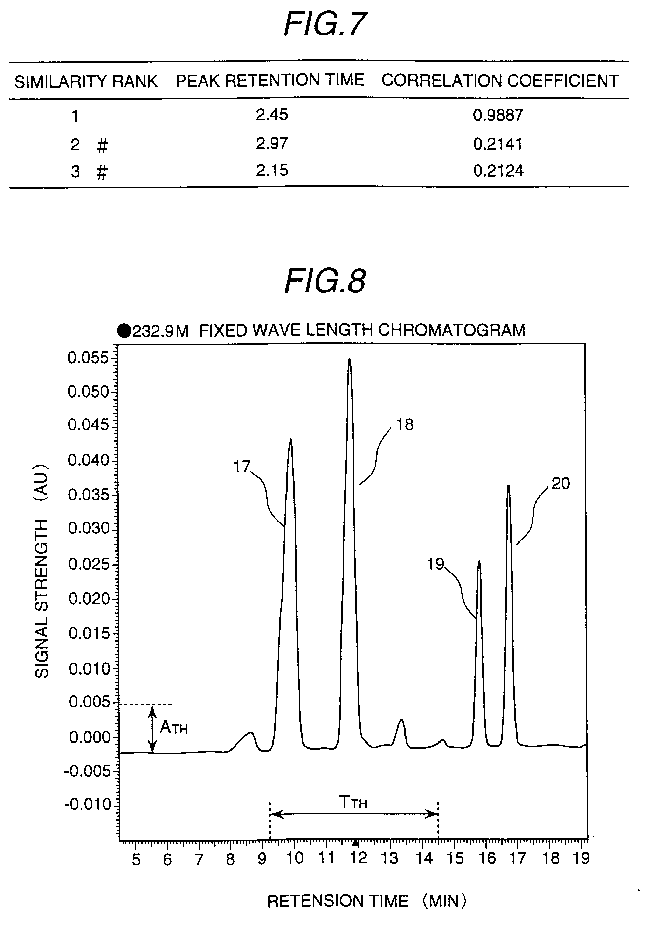

FIG. 7 is an example of an output report of the identification result of anthrace. In order to make discrimination of the correlation coefficient easy, a range capable of making the identification with a certain reliability is set as a reference value and the peaks not reaching the reference value are marked with (#) in the column of the rank of similar degree.

Another embodiment of the present invention will be described below.

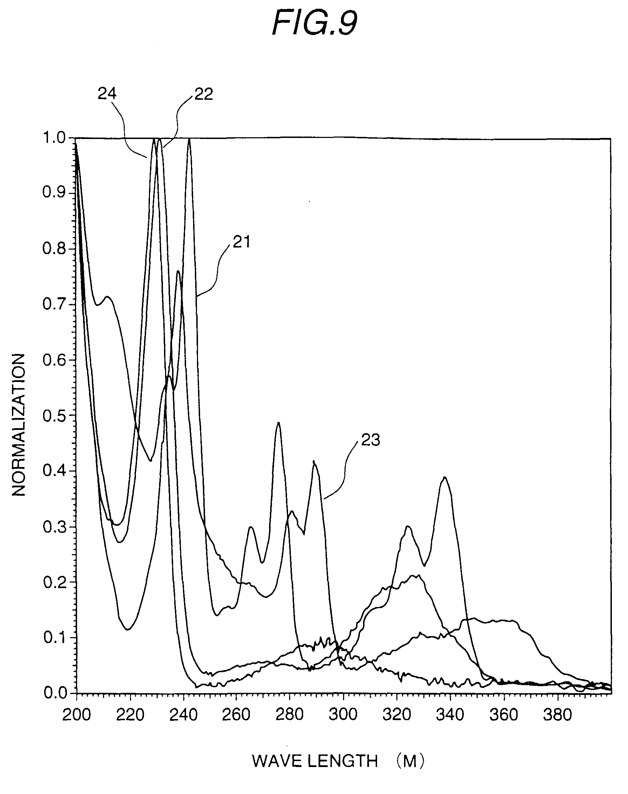

FIG. 8 shows an example of chromatograph obtained from a case of injecting an actual sample containing a plurality of components. FIG. 9 shows an example of spectrums at peak tops of the peaks 17, 18, 19 and 20 in FIG. 8, and the spectrums 21, 22, 23 and 24 correspond to the peaks 17, 18, 19 and 20, respectively.

Here, in a case of identifying an arbitrary number of objective components, it is assumed in the present embodiment that a threshold of peak height $A_{TH}$ and a range of retention time (a retention time range) $T_{TH}$ are preset before analyzing the sample or before performing comparison with the library. By doing so, number of comparisons can be reduced and erroneous identification of very small peaks such as noise can be prevented because very small peaks below the threshold are excluded from peaks to be compared. Number of comparisons is further reduced because peaks outside the retention time range are also excluded from peaks to be compared.

When the peak 18, for instance, is an objective component to be identified, the peak of the component 20 of the spectrum 24 very close to the spectrum 22 of the objective component 18, as shown in FIG. 9, cannot be erroneously identified since such a threshold described above is set and peaks to be compared can be limited to only the data of peaks selected by the threshold when the identification is performed. In the case of FIG. 8 and FIG. 9, number of comparisons required for identifying the objective component is only twice.

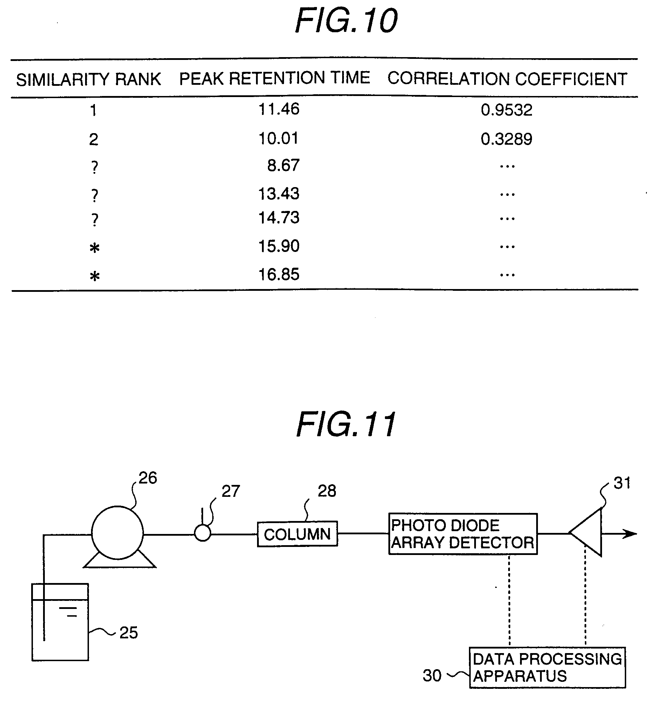

FIG. 10 shows an example of an output report of the identification result. In order to make the discrimination easy, a mark (?) is output and attached in the column of the rank of similar degree for a peak of which the height does not reach the preset threshold $A_{TH}$. In order to make the discrimination easy, a mark (*) is output and attached in the column of the rank of similar degree for a peak of which the retention time is outside the preset range $T_{TH}$.

Another embodiment of the present invention will be described below. In this embodiment, the identification processing described in the above embodiment is applied to a system in which an arbitrary objective component is selectively acquired.

FIG. 11 shows the construction of an example of a system in which an objective component is selectively acquired. The reference character 25 indicates an effluent and the reference character 26 indicates a pump. A sample is injected from a sample injecting unit indicated by the reference character 27, and separated by a column indicated by the reference character 28. A photo-diode array detector indicated by the reference character 29 detects absorption spectrums of the effluent from the column continuously on a time axis (the detection is performed with a certain sampling interval, in the strict sense), and the data is transmitted to a data processing unit indicated by the reference character 30 having a spectrum library to perform identification of an objective component.

When the objective component is identified by the data processing unit 30, the data processing unit performs processing for calculating a start time (rise time), a retention time and an end time (fall time) of the identified peak. These times are calculated in such a manner that in a wave-form datum expressed by retention time versus signal strength as shown in FIG. 2, the start time or the end time is determined by detecting a sampling data time point at which a difference between a signal strength at an identified retention time (the time when the wave-form with peak reaches a peak top) and a signal strength in the data sampled before or after the identified retention time becomes a certain value. The certain different value from the signal strength at the peak top point can be freely set, and accordingly sensitivity of detecting the wave-form with peak can be adjusted by adjusting the setting of the certain value.

The data processing unit 30 outputs control signals for starting of selective acquisition and ending of selective acquisition to a selective acquisition unit indicated by the reference character 31 based on the start time, the retention time and the end time of the identified peak. Thus, the selective acquisition of the objective component can be performed. Therein, in regard to the timings of starting and ending of selective acquisition, there are a method in which the timings are measured using the starting time and the ending time described above and a method in which arbitrary time periods are set before and after the retention time and the timings are measured using the time periods.

Since the time required for identification is a very short time according to the embodiment described above, identification of the objective component can be performed by the time when the sample reaches the selective acquisition unit 31 through the photo-diode array detector 29 and the process from analyzing the sample to selectively acquiring the objective component can be performed in real time without interrupting the work.

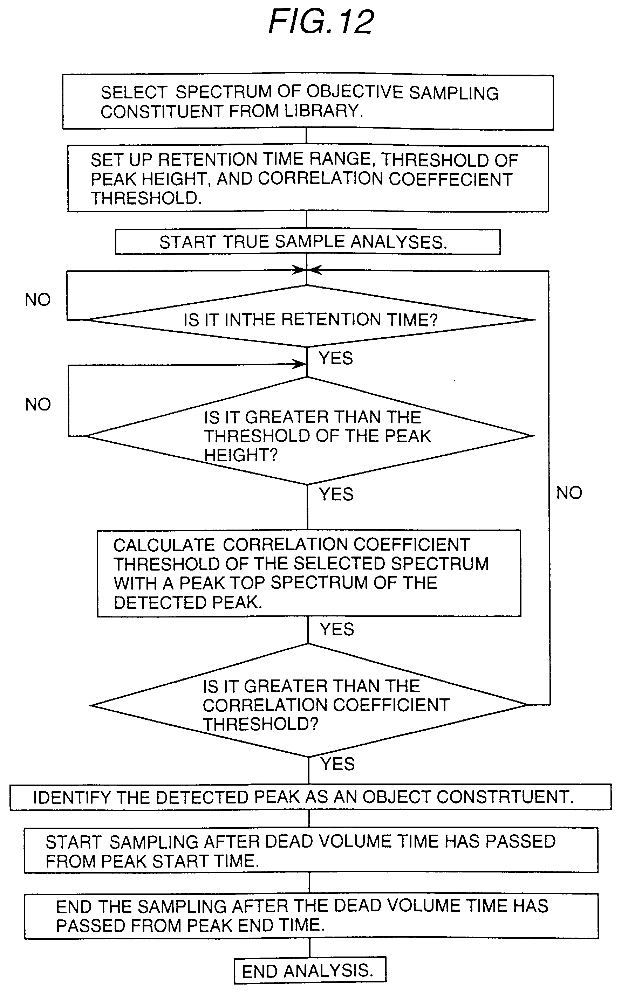

The processing of the present embodiment will be described below, referring to FIG. 12. FIG. 12 is a flow chart showing the processing for selectively acquiring an objective component out of an actual sample using the system of FIG. 11.

Initially, a spectrum of an objective component to be selectively acquired is selected out of the library. An operator can easily perform this processing through the displayed screen from the data processing unit 30 as described previously.

Next, a range of retention time, a peak height and a value of correlation coefficient are set as thresholds.

After that, an actual sample is analyzed, and it is judged whether or not the analyzed result obtained in real time is within the range of retention time, above the threshold of peak height based on the preset thresholds. If the analyzed result is below the thresholds, judging processing of other data are successively repeated.

If a datum satisfying the thresholds of the retention time and the peak height can be obtained, calculation of a correlation coefficient is performed and it is judged whether or not the correlation coefficient satisfies the preset value. If the correlation coefficient does not satisfy the preset value, the processing is returned to the judging step of the range of retention time again to judge the next datum. Therein, by returning to the judging step of the range of hold, it is possible to cope with a case where ranges of retention time are set in a plurality of positions in the processing.

If the correlation coefficient satisfies the preset value, the data processing unit 30 identifies the detected peak as the objective component, and after elapsing a dead volume time (the time until the sample reaches the selective acquisition unit 31 through the photo-diode array detector 29) from a peak start time (a starting time of the retention time of the peak of the objective component) the data processing unit 30 outputs a control signal to the selective acquisition unit so as to start selective acquisition.

Finally, after elapsing a dead volume time from a peak end time (an end time of the retention time of the peak of the objective component) the data processing unit 30 outputs a control signal to the selective acquisition unit so as to end the selective acquisition.

As the condition to identify the peak in the series of processes described above, the correlation coefficient between the selected spectrum of the objective component and the spectrum at the peak top of the detected peak is calculated in addition to the range of retention time and the threshold of peak height described above and a threshold is also provided in the obtained correlation coefficient. By doing so, it is possible to make the identification time short and to improve the identification capability.

Further, by controlling the starting time of selective acquisition and the ending time of selective acquisition of the selective acquisition unit based on the start time and the end time of the peak of the identified objective component, the objective component can be selectively acquired out of the actual sample containing the plurality of mixed components even if the peak retention time of the objective component changes due to change in the measuring conditions such as the effluent, the column and so on. Furthermore, by controlling the selective acquisition unit so that selective acquisition is limited to be performed only a short time before and after the retention time of the peak of the objective component.

According to the present invention, the liquid chromatograph can perform identification speedy since number of comparisons required for identifying an objective component can be reduced and the identification can be performed even during analyzing. Further, load of the data processing unit for performing the identification processing can be also substantially reduced.

Further, the identification capability can be improved and number of the comparisons can be reduced by setting the various kinds of thresholds as the identification conditions.

Further, it is possible to confirm that identification has been performed certainly by visualizing and displaying the identified component and outputting the identified result as a report.

Furthermore, in a case of selectively acquiring an objective component, the selective acquisition work can be start at the time when the objective component is identified during analyzing but not after completion of all analysis and accordingly the series of work processes from analysis to selective acquisition can be performed once-through since the analyzing processing and the identifying processing can be performed at a time. In addition to this, by controlling the selective acquisition unit based on the identification result, only the objective component can be certainly selectively acquired even if the retention time is changed due to change in the measuring conditions.

## Claims

1. A liquid chromatographic analysis apparatus comprising

   an eluant pump for supplying eluant,
   a sample injecting unit for mixing sample into said eluant so as to supply a mixture liquid,
   a separating column for separating said mixture liquid,
   a detector for detecting spectra of said mixture liquid passing through said separating column,
   a strage device for storing at least three of said spectra, and
   an identification means for selecting at least one of said spectra, comparing said one of said spectra with a spectrum detected by said detctor, thereby identifying a component of said sample.

2. A liquid chromatographic analysis apparatus as defined in claim 1, said liquid chromatographic analysis apparatus characterized in that

   similarity degrees of said spectra are calculated according to every peaks of output from said detector, and said similarity degrees are indicated on said waveform graph by superimposing numerals which are converted with said similarity degrees.

3. A liquid chromatographic analysis apparatus as defined in claim 2, said liquid chromatographic analysis apparatus characterized in that

   rank of said similarity degrees of said peak waveforms is indicated on said waveform graph.

4. A liquid chromatographic analysis apparatus as defined in claim 2, said liquid chromatographic analysis apparatus characterized in that

   said peak waveforms are displayed with different colors according to said similarity degree corresponding to said peaks.

5. A liquid chromatographic analysis apparatus as defined in claim 1, said liquid chromatographic analysis apparatus characterized by comprising

a means for setting up a threshold relating to said signal strength of said peak waveform, wherein said peak waveform within said threshold range is compared with said spectrum data in selected said standard data library.

6. A liquid chromatographic analysis apparatus as defined in claim 1, said liquid chromatographic analysis apparatus characterized by comprising

a setting means for setting up a designation range about said retention time, wherein said peak waveform within said retention time designated by said setting means is compared with said spectrum data in selected said standard data library.

7. A liquid chromatographic analysis apparatus as defined in claim 1, said liquid chromatographic analysis apparatus characterized in that

said spectrum data in selected said standard data library and said result obtained by said analyzing are simultaneously compared while said analyzing is performed.

8. A liquid chromatographic analysis apparatus comprising a means for analyzing a sample mixed with one or plural component and for outputting a result obtained by said analyzing as a waveform graph of a retention time and a signal strength, and a display means for indicating a graph of a spectrum data in said retention time when said waveform graph becomes a peak, said liquid chromatographic analysis apparatus characterized by comprising

a data library storing said spectrum data relating to said plural components,
a selecting means for selecting a spectrum of components which should be identified from said data library before said sample is analyzed,
an identification means for identifying an object component from said sample by successively comparing said selected spectrum of said components with spectrum data provided by analyzing said sample, and
a means for calculating a time when said waveform graph becomes a peak, wherein
a fractional device is controlled on the basis of said time.

9. A liquid chromatographic analysis apparatus comprising a means for analyzing a sample mixed with one or plural component and for outputting a result obtained by said analyzing as a waveform graph of a retention time and a signal strength, and a display means for indicating a graph of a spectrum data in said retention time when said waveform graph becomes a peak, said liquid chromatographic analysis apparatus characterized by comprising

a data library storing said spectrum data relating to said plural components,
a selecting means for selecting a spectrum of components which should be identified from said data library before said sample is analyzed,
an identification means for identifying an object component from said sample by successively comparing said selected spectrum of said components with spectrum data provided by analyzing said sample, and
a means for calculating a rise time and a fall time of a peak wave of said object component, wherein
a fractional device is controlled on the basis of said rise time and said fall time.

10. A liquid chromatographic analyzing method comprising steps of

supplying eluant,
mixing sample into said eluant so as to supply a mixture liquid,
separating said mixture liquid by a separating culumn,
detecting spectra of said mixture liquid passing through said separating column,
selecting at least one of said spectra, and
comparing said one of said spectra with a spectrum detected by said detctor, thereby identifying a component of said sample.

## FIG.1

## FIG.2

## FIG.3

## FIG.4

| PEAK RETENTION TIME | NAME |
| --- | --- |
| 8.67 | NAPHTALE |
| 10.01 | ACNAPHTY |
| 12.24 | FLUORENE |
| 13.43 | PHENANTH |
| 14.73 | ANTHRACE |
| 15.90 | FLUORANT |
| 16.85 | PYRENE |
| 19.76 | B (A) ANTH |
| 20.62 | CHRYSENCE |
| ⋮ | ⋮ |
| ⋮ | ⋮ |

## FIG.5

## FIG.6

# FIG.7

| SIMILARITY RANK | PEAK RETENTION TIME | CORRELATION COEFFICIENT |
|:---:|:---:|:---:|
| 1 | 2.45 | 0.9887 |
| 2  # | 2.97 | 0.2141 |
| 3  # | 2.15 | 0.2124 |

# FIG.8

●232.9M  FIXED WAVE LENGTH CHROMATOGRAM

RETENSION TIME （MIN）

# FIG.9

# FIG.10

| SIMILARITY RANK | PEAK RETENTION TIME | CORRELATION COEFFICIENT |
|:---:|:---:|:---:|
| 1 | 11.46 | 0.9532 |
| 2 | 10.01 | 0.3289 |
| ? | 8.67 | ... |
| ? | 13.43 | ... |
| ? | 14.73 | ... |
| * | 15.90 | ... |
| * | 16.85 | ... |

# FIG.11

# FIG.12

SELECT SPECTRUM OF OBJECTIVE SAMPLING CONSTITUENT FROM LIBRARY.

SET UP RETENTION TIME RANGE, THRESHOLD OF PEAK HEIGHT, AND CORRELATION COEFFECIENT THRESHOLD.

START TRUE SAMPLE ANALYSES.

NO

IS IT INTHE RETENTION TIME?

YES

NO

IS IT GREATER THAN THE THRESHOLD OF THE PEAK HEIGHT?

YES                                    NO

CALCULATE CORRELATION COEFFICIENT THRESHOLD OF THE SELECTED SPECTRUM WITH A PEAK TOP SPECTRUM OF THE DETECTED PEAK.

YES

IS IT GREATER THAN THE CORRELATION COEFFICIENT THRESHOLD?

YES

IDENTIFY THE DETECTED PEAK AS AN OBJECT CONSTRTUENT.

START SAMPLING AFTER DEAD VOLUME TIME HAS PASSED FROM PEAK START TIME.

END THE SAMPLING AFTER THE DEAD VOLUME TIME HAS PASSED FROM PEAK END TIME.

END ANALYSIS.